# EUROPEAN PATENT APPLICATION

(11) **EP 2 134 129 A2**
(43) Date of publication of application: **16.12.2009**
(21) Application number: 09153713.4
(22) Date of filing: 26.02.2009
(51) Int. Cl.: H04W 52/24

(54) **Wireless terminal device, wireless communication system, and wireless terminal device controlling method**

(30) Priority: 13.06.2008 JP 2008155815
(71) Applicant: Fujitsu Limited, Kawasaki-shi, Kanagawa 211-8588 (JP)
(72) Inventor: Satou, Hideyori, Kawasaki-shi, Kanagawa 211-8588 (JP); Konta, Shinji, Kawasaki-shi, Kanagawa 211-8588 (JP)
(74) Representative: Stebbing, Timothy Charles

(57) **Abstract**

A wireless terminal device (20a) determines, based on predetermined information, a transmission power that is a power of a signal to be transmitted to a connected base station (10a). The wireless terminal device (20a) includes a connected-base-station distance measuring unit (24) that measures a connected-base-station distance; an adjacent-base-station distance measuring unit (25) that measures an adjacent-base-station distance; a distance comparing unit (26) that compares the connected-base-station distance and the adjacent-base-station distance with each other when accepting information indicating that interference occurs from the adjacent base station (10b); and a transmission-power adjusting unit (28) that lowers a power of a signal to be transmitted to the connected base station (10a) below the transmission power when a difference between the connected-base-station distance and the adjacent-base-station distance is equal to or smaller than a predetermined threshold.

## Description

The present invention relates to a wireless terminal device, wireless communication system, and wireless terminal device controlling method.

In general, in a wireless network system, to eliminate a space among electric-wave reaching areas (referred to as "cells"), a plurality of base station devices are disposed. A wireless terminal device that performs wireless communications in such a wireless network system communicates with another wireless terminal device via a base station device covering a cell that provides the best electric-wave reception state. In the following, it is assumed that a base station device that performs wireless communications with a wireless terminal device A is referred to as a "connected base station" of the wireless terminal device A, a cell where the wireless terminal device A is present is referred to as a "connected cell" of the wireless terminal device A, a base station device covering a cell adjacent to the connected cell of the wireless terminal device A is referred to as an "adjacent base station" of the wireless terminal device A, and a cell adjacent to the connected cell of the wireless terminal device A is referred to as an "adjacent cell" of the wireless terminal device A.

Meanwhile, when a wireless terminal device is positioned at a cell edge of its connected cell, an interference degree of a reception signal at an adjacent base station of this wireless terminal device disadvantageously increases. Specifically, the wireless terminal device positioned at a cell edge transmits a high-power signal to its connected base station for the purpose of normally communicating with the connected base station. When the wireless terminal device transmits a high-power signal, this signal is received not only by the connected base station of the wireless terminal device but also by the adjacent base station. This invites a situation such that interference degree of the reception signal at the adjacent base station increases and the adjacent base station cannot normally communicate with the wireless terminal device positioned in the cell covered by the adjacent base station.

To get around this problem, in recent years, several technologies for reducing the interference degree of the reception signal in the base station device have been proposed. For example, a technology has been proposed in which information indicating that a wireless terminal device as an interference source is present (hereinafter, referred to as "interference-source information") is transmitted and received among base station devices, thereby reducing the interference degree of the reception signal. Specifically, a base station device with an increased interference degree transmits interference-source information to a base station device covering the wireless terminal device as an interference source. The base station device receiving the interference-source information specifies a wireless terminal device as an interference source, and instructs the specified wireless terminal device to decrease power of a transmission signal. The wireless terminal device receiving such an instruction makes an adjustment so as to decrease the power of its transmission signal. By using this technology, the wireless terminal device as an interference source transmits a low-power signal, thereby reducing the interference degree of the reception signal at the adjacent base station.

Also, for example, another technology has been proposed in which a wireless terminal device positioned at a cell edge autonomously decreases power of the transmission signal. Specifically, a wireless terminal device detects whether its own device is positioned at an edge of its connected cell. When detecting that it is positioned at a cell edge, the wireless terminal device autonomously makes an adjustment so as to decrease the power of its transmission signal. By using this technology, a wireless terminal device that may be an interference source transmits a low-power signal, thereby reducing the interference degree of the reception signal at the adjacent base station (see Japanese Laid-open Patent Publication No. 2003-289280).

However, in the technology of transmitting and receiving interference-source information among the base station devices, there is a problem in which it takes time for the wireless terminal device to decrease the power of the transmission signal. Specifically, in this technology, the respective base station devices transmit and receive interference-source information, the base station device specifies a wireless terminal device as an interference source, the base station device transmits to the specified wireless terminal device an instruction for decreasing the power of the transmission signal, and then the wireless terminal device adjusts the power of the transmission signal. In this manner, since many processes are performed among the devices in this technology, it disadvantageously takes time for the wireless terminal device to decrease the power of the transmission signal.

Moreover, in the technology in which each wireless terminal device autonomously decreases the power of the transmission signal, all wireless terminal devices positioned at any cell edges unconditionally decrease the power of the transmission signal. Therefore, a wireless terminal device not acting as an interference source may disadvantageously decrease the power of its transmission signal.

The present invention is made in view of the above described problems, and embodiments thereof may provide a wireless terminal device capable of decreasing the power of a signal to be transmitted to the base station device within a short time and only when the device is an interference source, a wireless communication system including the wireless terminal device, and a wireless terminal device controlling method.

According to an aspect of the invention, a wireless terminal device determines, based on predetermined information, a transmission power that is a power of a signal to be transmitted to a connected base station. The wireless terminal device includes a connected-base-station distance measuring unit that measures a connected-base-station distance that is a distance between the wireless terminal device and the connected base station that communicates with the wireless terminal device; an adjacent-base-station distance measuring unit that measures an adjacent-base-station distance that is a distance between the wireless terminal device and an adjacent base station that covers a cell adjacent to a cell covered by the connected base station; a distance comparing unit that compares the connected-base-station distance measured by the connected-base-station distance measuring unit and the adjacent-base-station distance measured by the adjacent-base-station distance measuring unit with each other when accepting information indicating that interference occurs from the adjacent base station; and a transmission-power adjusting unit that lowers a power of a signal to be transmitted to the connected base station below the transmission power when a difference between the connected-base-station distance and the adjacent-base-station distance compared by the distance comparing unit is equal to or smaller than a predetermined threshold.

It is to be understood that both the foregoing general description and the following detailed description are exemplary and explanatory and are not restrictive of the invention, as claimed.

Reference is made, by way of example only, to the accompanying drawings in which:
FIGS. 1A to 1D are drawings for explaining a general outline of a wireless communication system according to a first embodiment;
FIG. 2 is a drawing of the configuration of a base station device in the wireless communication system according to the first embodiment;
FIG. 3 is a drawing of an example of a format of a system information block;
FIG. 4 is a drawing of the configuration of a wireless terminal device in the wireless communication system according to the first embodiment;
FIG. 5 is a drawing of an example of a format of control channel information;
FIG. 6 is a flowchart of the procedure of a broadcast channel information transmitting process by the base station device depicted in FIG. 2;
FIG. 7 is a flowchart of the procedure of a power controlling process by the wireless terminal device depicted in FIG. 4;
FIG. 8 is a drawing of the configuration of a wireless terminal device in a wireless communication system according to a second embodiment; and
FIG. 9 is a drawing of the configuration of a base station device in the wireless communication system according to the second embodiment.

Embodiments of the wireless terminal device, wireless communication system, and wireless terminal device controlling method disclosed in the present application are explained in detail below based on the drawings. Note that these embodiments are not meant to restrict the wireless terminal device, wireless communication system, and wireless terminal device controlling method disclosed in the present application.

### [a] First embodiment

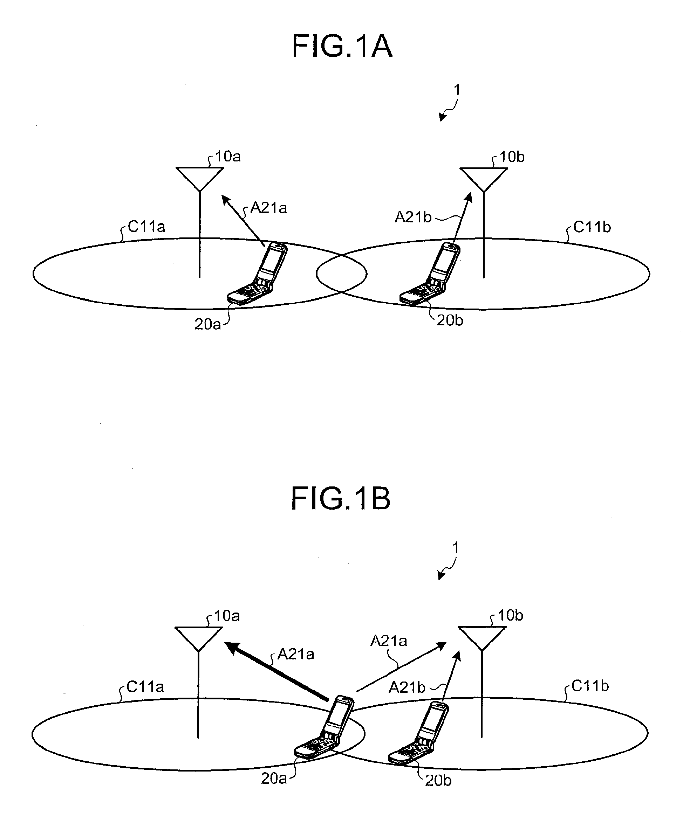

First, a general outline of a wireless communication system according to a first embodiment is explained. FIGS. 1A to 1D are drawings for explaining a general outline of a wireless communication system 1 according to the first embodiment. In the wireless communication system 1 depicted in FIG. 1A, a base station device 10a covers a cell C11a, whilst a base station device 10b covers a cell C11b.

The connected base station of a wireless terminal device 20a is the base station device 10a, and the wireless terminal device 20a transmits a signal A21a to the base station device 10a to communicate with the base station device 10a. Also, the connected base station of a wireless terminal device 20b is the base station device 10b, and the wireless terminal device 20b transmits a signal A21b to the base station device 10b to communicate with the base station device 10b.

In FIG. 1A, it is assumed that the wireless terminal device 20a is not positioned at a cell edge of the cell C11a, and the wireless terminal device 20b is not positioned at a cell edge of the cell C11b. In this case, the wireless terminal device 20a communicates with the base station device 10a without increasing the power of the transmission signal A21a. That is, in the state depicted in FIG. 1A, the interference degree of the reception signal at the base station device 10b is not increased with a signal transmitted from the wireless terminal device 20a. Similarly, since the wireless terminal device 20b communicates with the base station device 10b without increasing the power of the transmission signal, the interference degree of the reception signal at the base station device 10a is not increased with a signal transmitted from the wireless terminal device 20b.

Next, as depicted in FIG. 1B, it is assumed that the wireless terminal device 20a depicted in FIG. 1A moves to a cell edge of the cell C11a. In this case, for normal communication with the base station device 10a, the wireless terminal device 20a increases the power of the transmission signal A21a. When the wireless terminal device 20a transmits the high-power signal A21a, this signal A21a is received not only by the base station device 10a but also by the base station device 10b as an adjacent base station of the wireless terminal device 20a. That is, the base station device 10b receives the signal A21a transmitted from the wireless terminal device 20a and the signal A21b transmitted from the wireless terminal device 20b, thereby increasing the interference degree of the reception signal.

Here, when detecting that interference degree of the reception signal exceeds a predetermined threshold, the base station device 10b transmits to all communicable wireless terminal devices broadcast channel information (hereinafter, referred to as "BCH information") set with information indicative of an excessive interference state. Here, the "all communicable wireless terminal devices" mean all wireless terminal devices that can communicate with the base station device 10b, and the "excessive interference state" means that the interference degree of the reception signal exceeds a predetermined threshold.

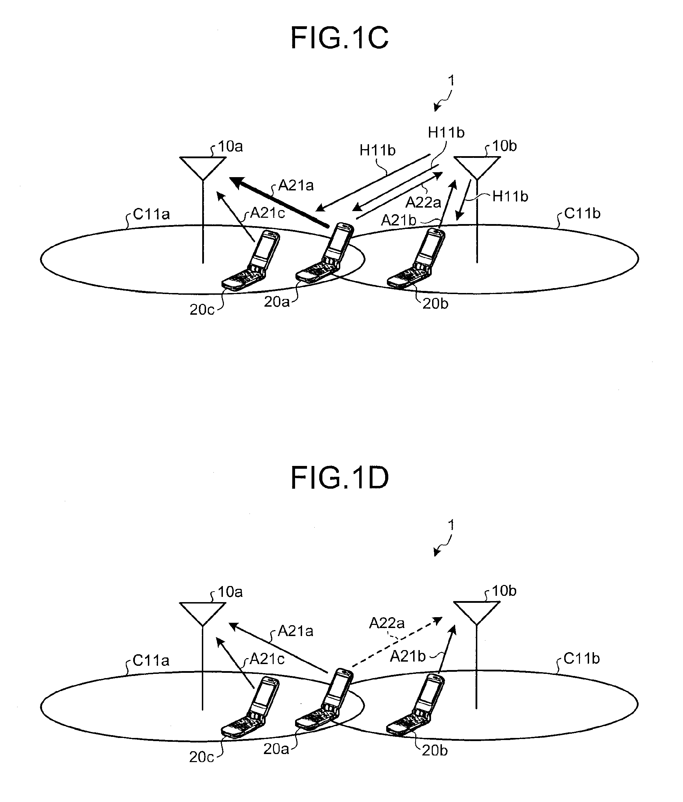

Specific explanation is now made by using FIG. 1C. In FIG. 1C, in addition to the wireless terminal devices 20a and 20b depicted in FIG. 1B, a wireless terminal device 20c is positioned in the cell C11a. It is assumed that the connected base station of the wireless terminal device 20c is the base station device 10a, and the wireless terminal device 20c is not positioned near the edge of the cell C11a.

In FIG. 1C, when detecting an excessive interference state, the base station device 10b transmits to the wireless terminal devices 20a to 20c BCH information Hllb set with information indicative of an excessive interference state. Note that it is assumed herein that the base station device 10b can communicate with the wireless terminal devices 20a to 20c.

Each wireless terminal device receiving the BCH information Hllb determines whether its own device is acting as an interference source and, when determining that it is an interference source, makes an adjustment so as to decrease the power of the transmission signal. Specifically, when receiving the BCH information Hllb from the adjacent base station, each wireless terminal device measures a distance between the position where its own device is positioned and the connected base station and a distance between the position where its own device is positioned and the adjacent base station that transmits the BCH information H11b. When a difference between these distances is smaller than a predetermined threshold, the wireless terminal device determines that it is causing interference. The reason for this is as follows. When the difference between these distances is small, this means that the distance between the wireless terminal device and the connected base station and the distance between the wireless terminal device and the adjacent base station are approximately equal to each other and that a signal transmitted from the wireless terminal device is received not only by the connected base station and also by the adjacent base station. Here, when receiving the BCH information from the connected base station, each of the wireless terminal devices does not perform the distance measuring process but ends the process.

Explanation is now made by using an example of FIG. 1C. The wireless terminal device 20a receiving the BCH information Hllb from the base station device 10b determines itself to be an interference source because a difference between the distance between the position where the device is positioned and the base station device 10a and the distance between the position where the device is position and the base station device 10b is small. Then, the wireless terminal device 20a makes an adjustment so as to decrease the power of the transmission signal A21a.

Also, the wireless terminal device 20c receiving the BCH information Hllb from the base station device 10b determines itself not to be an interference source because a difference between the distance between the position where the device is positioned and the base station device 10a and the distance between the position where the device is position and the base station device 10b is large. Then, the wireless terminal device 20c communicates with the base station device 10a without decreasing the power of a transmission signal A21c.

Furthermore, the wireless terminal device 20b receiving the BCH information Hllb from the base station device 10b does not adjust the power because it receives the BCH information Hllb from the base station device 10b, which is the connected base station. This is because the signal transmitted by the wireless terminal device 20b, whose connected base station is the base station device 10b, is not a cause of an increase of the interference degree of the reception signal at the base station device 10b.

As a result, as depicted in FIG. 1D, the signal A21a transmitted from the wireless terminal device 20a decreases, and therefore the signal A21a received by the base station device 10b weakens. With this, the interference degree of the reception signal at the base station device lOb can be reduced.

In this manner, in the wireless communication system 1 according to the first embodiment, a base station device detecting an excessive interference state transmits to a wireless terminal device BCH information set with information indicative of the excessive interference state, and the wireless terminal device receiving the BCH information adjusts the power of the transmission signal. Therefore, only with a process between these devices carried out once, the wireless terminal device can adjust the power of the transmission signal. Thus, the wireless terminal device in the wireless communication system according to the first embodiment can decrease the power of the transmission signal within a short time when it finds itself to be an interference source.

Also, in the wireless communication system 1 according to the first embodiment, the wireless terminal device determines whether it is an interference source, and adjusts the power of the transmission signal. Therefore, only the wireless terminal device acting as an interface source can decrease the power of the transmission signal. With this, any wireless terminal device that is positioned at a cell edge but is not an interference source can communicate with the base station device without decreasing the power of the transmission signal.

As explained above, in the wireless communication system 1 according to the first embodiment, the wireless terminal device can decrease the power of a signal to be transmitted to the base station device within a short time and only when the device is an interference source.

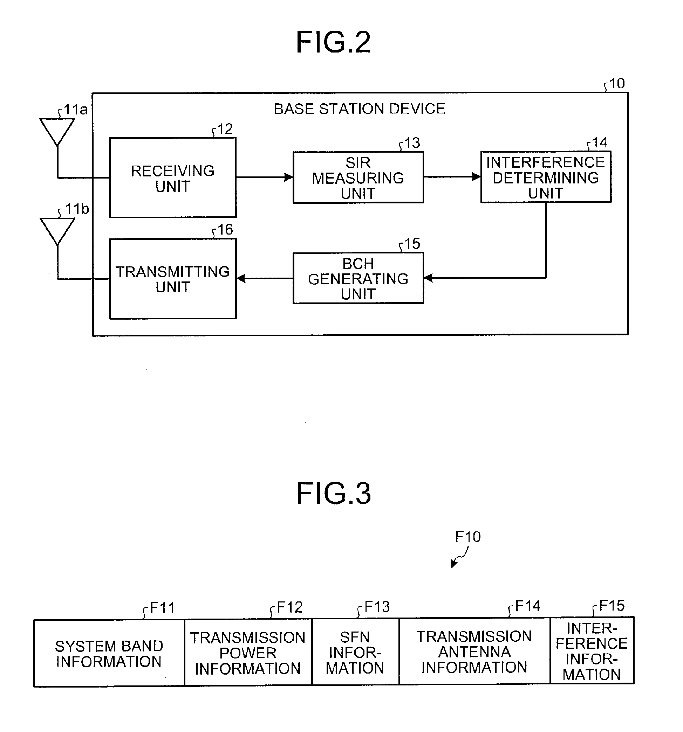

Next, the configuration of the base station device in the wireless communication system 1 according to the first embodiment is explained. FIG. 2 is a drawing of the configuration of the base station device in the wireless communication system 1 according to the first embodiment. A base station device 10 depicted in FIG. 2 corresponds to the base station devices 10a and 10b. Note that only the components necessary for achieving the wireless communication system 1 according to the first embodiment are depicted in FIG. 2.

As depicted in FIG. 2, the base station device 10 includes antennas 11a and 11b, a receiving unit 12, a Signal to Interference Ratio (SIR) measuring unit 13, an interference determining unit 14, a BCH generating unit 15, and a transmitting unit 16.

The antenna 11a is an antenna for receiving a signal transmitted from any wireless terminal device, whilst the antenna 11b is an antenna for transmitting a signal to any wireless terminal device. The receiving unit 12 is a processing unit that receives a signal transmitted from any wireless terminal device via the antenna 11a and outputs the received signal to the SIR measuring unit 13. The SIR measuring unit 13 is a processing unit that measures an SIR based on the signal input from the receiving unit 12 and outputs the measured SIR to the interference determining unit 14.

The interference determining unit 14 is a processing unit that determines whether the SIR input from the SIR measuring unit 13 is equal to or smaller than a predetermined threshold and outputs information indicative of whether the base station device 10 is in an excessive interference state (hereinafter, referred to as "excessive interference information") to the BCH generating unit 15. Specifically, when the SIR is equal to or smaller than the predetermined threshold, the interference determining unit 14 outputs to the BCH generating unit 15 excessive interference information indicating that the base station device 10 is in an excessive interference state. On the other hand, when the SIR is greater than the predetermined threshold, the interference determining unit 14 outputs to the BCH generating unit 15 excessive interference information indicating that the base station device 10 is not in an excessive interference state.

Here, in the first embodiment, the case is explained in which the interference determining unit 14 determines whether the base station device is in an excessive interference state based on the SIR. Alternatively, the interference determining unit 14 may determine whether the base station device is in an excessive interference state based on information other than the SIR.

The BCH generating unit 15 is a processing unit that generates BCH information. Specifically, the BCH generating unit 15 generates BCH information including the excessive interference information input from the interference determining unit 14 and outputs the generated BCH information to the transmitting unit 16. At this time, the BCH generating unit 15 sets the excessive interference information to a system information block in the BCH information.

The transmitting unit 16 is a processing unit that transmits a signal to a wireless terminal device(s) via the antenna 11b. Specifically, when BCH information is input from the BCH generating unit 15, the transmitting unit 16 transmits to all communicable wireless terminal devices.

Next, the system information block in the BCH information generated by the BCH generating unit 15 is explained by using FIG. 3. FIG. 3 is a drawing of an example of a format of the system information block F10. As depicted in FIG. 3, a system information block F10 includes system band information F11, transmission power information F12, System Frame Number (SFN) information F13, transmission antenna information F14, and interference information F15.

In the system band information F11, band information of the cell covered by the base station device 10 is set. In the transmission power information F12, power information of the signal to be transmitted from the base station device 10 to the wireless terminal devices is set. In the SFN information F13, a wireless frame number representing a timing of receiving a signal is set. In the transmission antenna information F14, information about the antennas transmitting and receiving signals to and from the wireless terminal devices is set.

In the interference information F15, the excessive interference information is set. Note that it is assumed in the Specification that a value "1" indicating that excessive interference is present is set in the interference information F15 when the base station device 10 is in an excessive interference state and a value "0" indicating that excessive interference is not present is set in the interference information F15 when the base station device 10 is not in an excessive interference state.

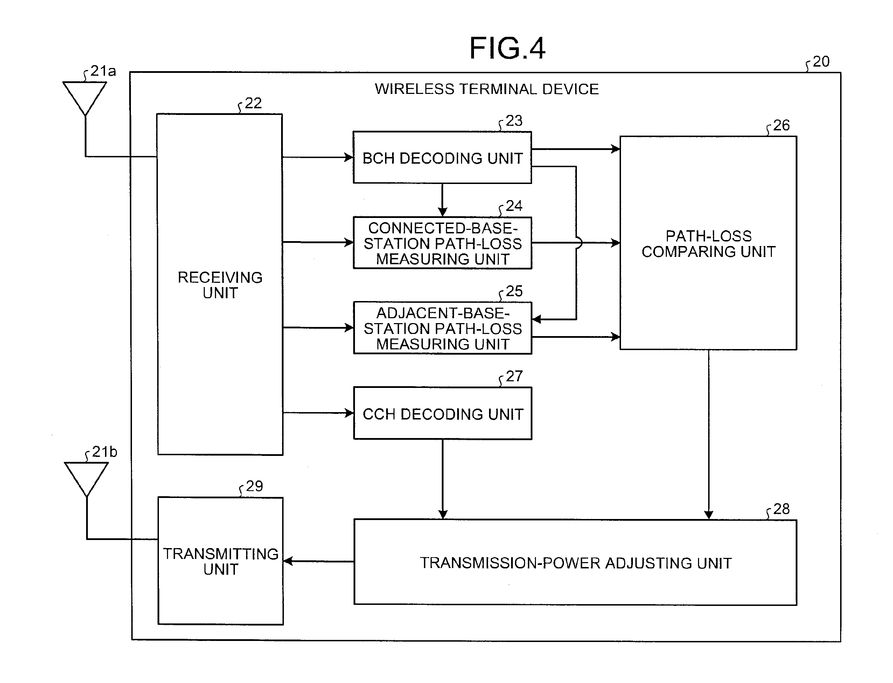

Next, the configuration of the wireless terminal device in the wireless communication system 1 according to the first embodiment is explained. FIG. 4 is a drawing of the configuration of the wireless terminal device in the wireless communication system 1 according to the first embodiment. A wireless terminal device 20 depicted in FIG. 4 corresponds to the wireless terminal devices 20a to 20c. Note that only the components necessary for achieving the wireless communication system 1 according to the first embodiment are depicted in FIG. 4.

As depicted in FIG. 4, the wireless terminal device 20 includes antennas 21a and 21b, a receiving unit 22, a BCH decoding unit 23, a connected-base-station path-loss measuring unit 24, an adjacent-base-station path-loss measuring unit 25, a path-loss comparing unit 26, a control channel (CCH) decoding unit 27, a transmission-power adjusting unit 28, and a transmitting unit 29. The antenna 21a is an antenna for receiving a signal transmitted from the base station device 10, whilst the antenna 21b is an antenna for transmitting a signal to the base station device 10.

The receiving unit 22 is a processing unit that receives a signal transmitted from the base station device 10 via the antenna 21a and outputs the reception signal to the BCH decoding unit 23, the connected-base-station path-loss measuring unit 24, the adjacent-base-station path-loss measuring unit 25, and the CCH decoding unit 27. Specifically, the receiving unit 22 outputs the BCH information transmitted from the base station device 10 to the BCH decoding unit 23. Here, the receiving unit 22 receives BCH information also from base station devices other than the connected base station of the wireless terminal device 20. Furthermore, the receiving unit 22 outputs all signals transmitted from the base station device 10 to the connected-base-station path-loss measuring unit 24 and the adjacent-base-station path-loss measuring unit 25. Still further, the receiving unit 22 outputs a control channel (CCH) information transmitted from the base station device 10 to the CCH decoding unit 27. The CCH information is control information to be transmitted from the base station device 10 to wireless terminal devices covered by the base station device 10.

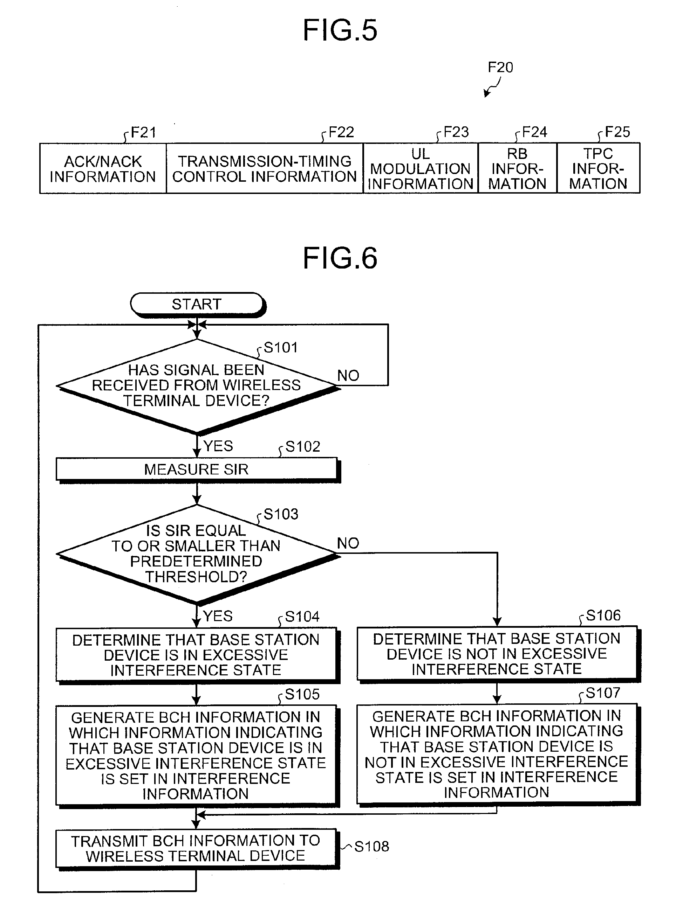

Here, the CCH information is explained by using FIG. 5. FIG. 5 is a drawing of an example of a format of CCH information F20. As depicted in FIG. 5, the CCH information F20 includes ACKnowledge/Negative ACKnowledge (ACK/NACK) information F21, transmission-timing control information F22, Uplink (UL) modulation information F23, Resource Block (RB) information F24, and Transmission Power Control (TPC) information F25.

In the ACK/NACK information F21, information indicating whether the base station device 10 has normally received a signal transmitted from the wireless terminal device 20 is set. In the transmission-timing control information F22, information regarding a signal transmission timing between the wireless terminal device 20 and the base station device 10 is set. In the UL modulation information F23, information regarding a modulation technique is set. In the RB information F24, information about RB for use by the wireless terminal device 20 is set. In the TPC information F25, information about the power of the signal to be transmitted by the wireless terminal device 20 to the base station device 10 is set.

Referring back to FIG. 4, the BCH decoding unit 23 is a processing unit that decodes BCH information input from the receiving unit 22 and outputs to the connected-base-station path-loss measuring unit 24 and others various information included in the system information block in the decoded BCH information. Specifically, the BCH decoding unit 23 outputs the power information set in the transmission power information F12 included in the decoded system information block to the connected-base-station path-loss measuring unit 24 and the adjacent-base-station path-loss measuring unit 25. Also, the BCH decoding unit 23 outputs the excessive interference information set in the interference information F15 included in the decoded system information block to the path-loss comparing unit 26.

The connected-base-station path-loss measuring unit 24 is a processing unit that measures a signal transmitted from the connected base station of the wireless terminal device 20 and outputs the measured path loss to the path-loss comparing unit 26. Specifically, the connected-base-station path-loss measuring unit 24 measures the power of a signal transmitted from the connected base station from among reception signals input from the receiving unit 22. Then, the connected-base-station path-loss measuring unit 24 calculates a difference between one of the power information input from the BCH decoding unit 23 that is included in the BCH information transmitted from the connected base station and the power of the reception signal measured as explained above, thereby measuring a path loss. Here, the path loss is a power loss at the time of signal propagation, indicating that a larger path-loss value means a longer distance between the wireless terminal device and the base station device.

The adjacent-base-station path-loss measuring unit 25 is a processing unit that measures a path loss of the signal transmitted from the adjacent base station of the wireless terminal device 20 and outputs the measured path loss to the path-loss comparing unit 26. Specifically, the adjacent-base-station path-loss measuring unit 25 measures the power of a signal transmitted from an adjacent base station A from among reception signals input from the receiving unit 22. Then, the adjacent-base-station path-loss measuring unit 25 calculates a difference between one of the power information input from the BCH decoding unit 23 and the power of the measured reception signal to measure a path loss.

For example, when measuring the path loss of the signal transmitted from the adjacent base station A, the adjacent-base-station path-loss measuring unit 25 measures a power of the signal transmitted from the adjacent base station A. Then, the adjacent-base-station path-loss measuring unit 25 calculates a difference between one of the power information input from the BCH decoding unit 23 that is included in the BCH information transmitted from the adjacent base station A and the power of the reception signal measured as explained above to measure a path loss. Since the wireless terminal device 20 receives signals from a plurality of adjacent base stations, the adjacent-base-station path-loss measuring unit 25 measures a path loss for each adjacent base station.

The path-loss comparing unit 26 is a processing unit that determines whether the wireless terminal device 20 is an interference source for an adjacent base station when the excessive interference information input from the BCH decoding unit 23 indicates "1" (excessive interference is present). Specifically, the path-loss comparing unit 26 compares the path loss input from the connected-base-station path-loss measuring unit 24 and the path loss input from the adjacent-base-station path-loss measuring unit 25 with each other. For example, when the excessive interference information included in the BCH information transmitted from the adjacent base station A indicates "1" (excessive interference is present), the path-loss comparing unit 26 compares the path loss input from the connected-base-station path-loss measuring unit 24 and a path loss of the adjacent base station A input from the adjacent-base-station path-loss measuring unit 25.

Then, when a difference between these path losses is equal to or smaller than a predetermined threshold, the path-loss comparing unit 26 outputs to the transmission-power adjusting unit 28 information indicating that the wireless terminal device 20 is an interference source. On the other hand, when a difference between these path losses is greater than a predetermined threshold, the path-loss comparing unit 26 outputs to the transmission-power adjusting unit 28 information indicating that the wireless terminal device 20 is not an interference source.

As explained above, since the path loss serves as an index of the distance between the wireless terminal device and the base station device, a smaller difference between the path losses indicates that the distance between the wireless terminal device and the connected base station and the distance between the wireless terminal device and the adjacent base station are approximately equal to each other. That is, by determining whether the difference between these path losses is equal to or smaller than the predetermined threshold, the path-loss comparing unit 26 determines whether the wireless terminal device 20 is an interference source. Here, an example is explained in the first embodiment in which a path loss is used as an index of the distance between the wireless terminal device and the base station device. Alternatively, the wireless terminal device 20 may measure an index of the distance between the wireless terminal device and the base station device and the distance between the wireless terminal device and the base station device based on information other than the path loss.

The CCH decoding unit 27 is a processing unit that decodes the CCH information input from the receiving unit 22 and outputs the TPC information included in the decoded CCH information to the transmission-power adjusting unit 28.

The transmission-power adjusting unit 28 is a processing unit that adjusts the power of a signal to be transmitted to the base station device 10. Specifically, when information indicating that the wireless terminal device 20 is an interference source is input from the path-loss comparing unit 26, the transmission-power adjusting unit 28 adjusts the power of a signal to be transmitted to the connected base station so that the power is lower than the power information set in the TPC information. At this time, the transmission-power adjusting unit 28 decreases the power to a level at which the wireless terminal device 20 can communicate with the base station device 10 at minimum. On the other hand, when information indicating that the wireless terminal device 20 is not an interference source is input from the path-loss comparing unit 26, the transmission-power adjusting unit 28 adjusts the power of a signal to be transmitted to the connected base station according to the TPC information input from the CCH decoding unit 27.

Although it is assumed in the first embodiment that the wireless terminal device 20 adjusts the transmission power based on the TPC information when the wireless terminal device 20 is not an interference source, the wireless terminal device 20 may adjust the transmission power based on information other than the TPC information.

The transmitting unit 29 is a processing unit that transmits a signal to the base station device via the antenna 21b. Specifically, the transmitting unit 29 transmits a signal to the base station device 10 according to the power adjusted by the transmission-power adjusting unit 28.

Next, the procedure of the BCH information transmitting process by the base station device 10 depicted in FIG. 2 is explained. FIG. 6 is a flowchart of the procedure of a BCH information transmitting process by the base station device 10 depicted in FIG. 2.

As depicted in FIG. 6, when receiving a signal from the wireless terminal device 20 via the antenna 11a (Step S101), the SIR measuring unit 13 of the base station device 10 measures an SIR based on this signal (Step S102).

When the SIR measured by the SIR measuring unit 13 is equal to or smaller than a predetermined threshold (Yes at Step S103), the interference determining unit 14 determines that the base station device 10 is in an excessive interference state (Step S104). Then, the BCH generating unit 15 generates BCH information set with information indicating that the base station device 10 is in an excessive interference state to the interference information of the system information block (Step S105).

On the other hand, when the SIR is greater than the predetermined threshold (No at Step S103), the interference determining unit 14 determines that the base station device 10 is not in an excessive interference state (Step S106). Then, the BCH generating unit 15 generates BCH information set with information indicating that the base station device 10 is not in an excessive interference state to the interference information of the system information block (Step 5107).

Then, the transmitting unit 16 transmits the BCH information generated by the BCH generating unit 15 to all communicable wireless terminal devices via the antenna 11b (Step 5108).

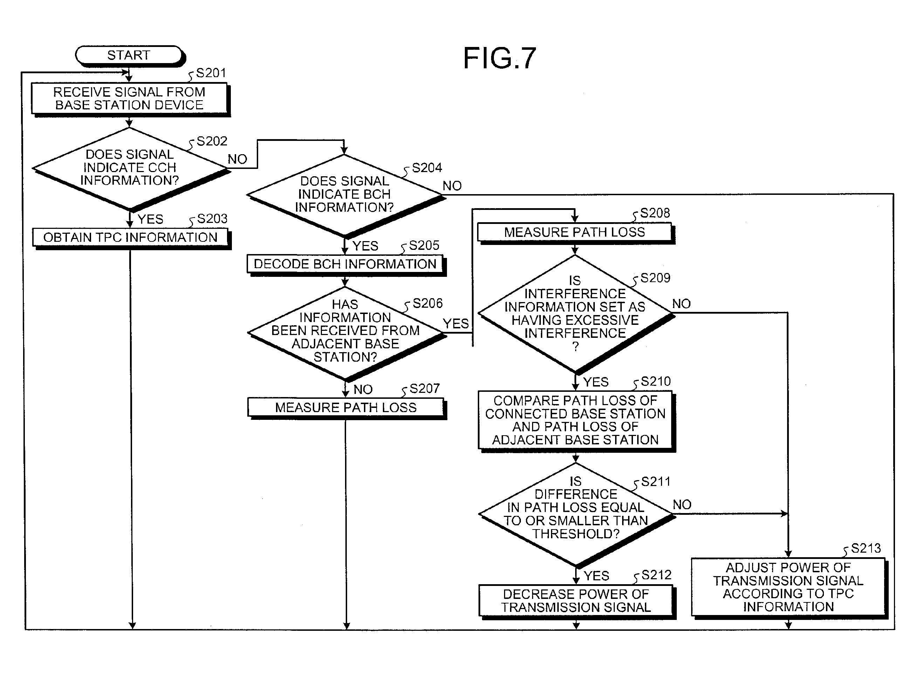

Next, the procedure of a power controlling process by the wireless terminal device 20 depicted in FIG. 4 is explained. FIG. 7 is a flowchart of the procedure of a power controlling process by the wireless terminal device 20 depicted in FIG. 4.

As depicted in FIG. 7, the receiving unit 22 of the wireless terminal device 20 receives a signal from the base station device 10 (Step S201). When this signal indicates CCH information (Yes at Step S202), the CCH decoding unit 27 decodes the CCH information to obtain the TPC information included in the decoded CCH information (Step 5203).

On the other hand, when the signal received from the base station device 10 does not indicate CCH information (No at Step S202) but indicates BCH information (Yes at Step S204), the BCH decoding unit 23 decodes the BCH information (Step S205).

When the transmission source of the BCH information received from the base station device 10 is a connected base station (No at Step S206), the connected-base-station path-loss measuring unit 24 measures a path loss of the signal transmitted from the connected base station (Step 5207).

On the other hand, when the transmission source of the BCH information received from the base station device 10 is an adjacent base station (Yes at Step S206), the adjacent-base-station path-loss measuring unit 25 measures a path loss of the signal transmitted from the adjacent base station (Step S208). Then, when the excessive interference information set in the interference information F15 included in the system information block of the BCH information decoded by the BCH decoding unit 23 indicates that "excessive interference is present" (Yes at Step S209), the path-loss comparing unit 26 compares the path loss measured by the connected-base-station path-loss measuring unit 24 and the path loss measured by the adjacent-base-station path-loss measuring unit 25 (Step S210).

When the difference between the path losses compared by the path-loss comparing unit 26 is equal to or smaller than a predetermined threshold (Yes at Step S211), the transmission-power adjusting unit 28 makes an adjustment so as to decrease the power of a signal to be transmitted to the connected base station (Step S212).

On the other hand, when the excessive interference information set in the interference information F15 included in the system information block indicates that "excessive interference is not present" (No at Step S209) or when the difference between the path losses compared by the path-loss comparing unit 26 is greater than a predetermined threshold (No at Step S211), the transmission-power adjusting unit 28 adjusts the power of a signal to be transmitted to the connected base station according to the TPC information obtained by the CCH decoding unit 27 (Step S213).

As explained above, in the wireless communication system 1 according to the first embodiment, a base station device detecting an excessive interference state transmits BCH information set with information indicative of the excessive interference state to a wireless terminal device, and the wireless terminal device receiving this BCH information adjusts the power of a transmission signal after determining whether the wireless terminal device is an interference source. Therefore, the wireless terminal device acting as an interference source can decrease the power of the transmission signal within a short time.

### [b] Second embodiment

Meanwhile, in the first embodiment, the wireless terminal device may first adjust the transmission power and then notify the base station device of information indicating that the wireless terminal device is an interference source. With this, the base station device can use this information for a process of assigning a time slot and other processes. In the following, an example is explained in which the wireless terminal device first adjusts the transmission power and then notifies the base station device of information indicating that its own device is an interference source.

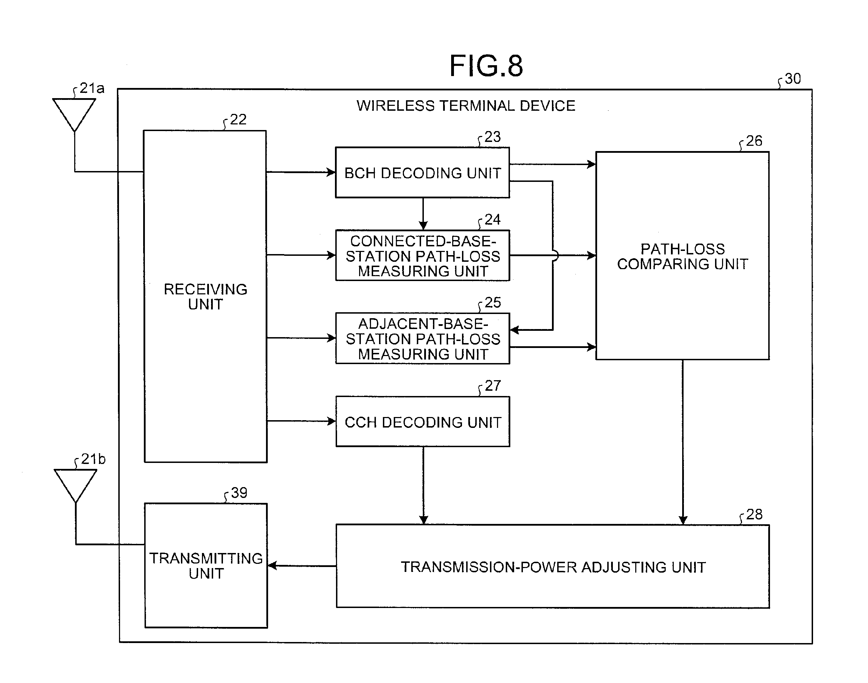

First, the configuration of a wireless terminal device in a wireless communication system 2 according to a second embodiment is explained. FIG. 8 is a drawing of the configuration of a wireless terminal device 30 in the wireless communication system 2 according to the second embodiment. Note that the exemplary configuration of the wireless communication system 2 according to the second embodiment is similar to that of the exemplary configuration depicted in FIGS. 1A to 1D, and therefore are not explained herein.

As depicted in FIG. 8, compared with the wireless terminal device 20 depicted in FIG. 4, the wireless terminal device 30 includes a transmitting unit 39 in place of the transmitting unit 29. The transmitting unit 39 transmits a signal to a base station device according to the power adjusted by the transmission-power adjusting unit 28. Also, when the transmission power is decreased by the transmission-power adjusting unit 28, the transmitting unit 39 sets information indicating that its own device is an interference source (hereinafter, referred to as "interference-source notification information") to the CCH information, and transmits the set information to the connected base station.

For example, it is assumed that the wireless terminal device 20a in FIG. 1C corresponds to the wireless terminal device 30. In this case, the transmission-power adjusting unit 28 of the wireless terminal device 30 decreases the transmission power. Also, the transmitting unit 39 of the wireless terminal device 30 transmits interference-source notification information to the base station device 10a, which is the connected base station of the wireless terminal device 30.

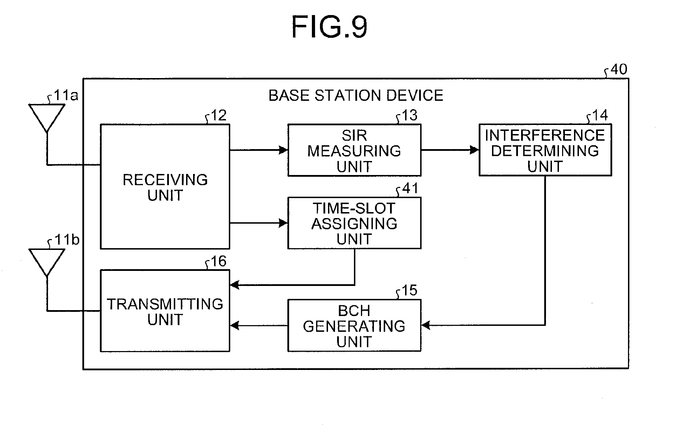

Next, the configuration of the base station device in the wireless communication system 2 according to the second embodiment is explained. FIG. 9 is a drawing of the configuration of a base station device 40 in the wireless communication system 2 according to the second embodiment. As depicted in FIG. 9, compared with the base station device 10 depicted in FIG. 2, the base station device 40 newly includes a time-slot assigning unit 41.

The time-slot assigning unit 41 is a processing unit that assigns a time slot to a wireless terminal device whose connected base station is the base station device 40. Specifically, when interference-source notification information is accepted from the wireless terminal device 30 via the receiving unit 12, the time-slot assigning unit 41 assigns a time slot to the wireless terminal device whose connected base station is the base station device 40 so that a signal transmitted from the wireless terminal device 30 does not interfere with other base station devices.

As explained above, in the wireless communication system 2 according to the second embodiment, when a wireless terminal device determines itself to be an interference source, the wireless terminal device decreases the power of the transmission signal and transmits interference-source notification information to the connected base station. Therefore, the base station device can assign a time slot to the wireless terminal device by using the interference-source notification information.

Note that other embodiments configured by applying the components, representations, and arbitrary combinations of the components of the wireless terminal device disclosed in the present application to a method, apparatus, system, computer program, recording medium, data structure, and others are also effective.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present inventions have been described in detail, it should be understood that the various changes, substitutions, and alterations could be made hereto without departing from the scope of the claims.

## Claims

1. A wireless terminal device (20a) that determines a transmission power based on predetermined information, the transmission power being a power of a signal to be transmitted to a connected base station (10a), the wireless terminal device (20a) comprising:
a connected-base-station distance measuring unit (24) that measures a connected-base-station distance that is a distance between the wireless terminal device (20a) and the connected base station (10a) that communicates with the wireless terminal device (20a);
an adjacent-base-station distance measuring unit (25) that measures an adjacent-base-station distance that is a distance between the wireless terminal device (20a) and an adjacent base station (10b) that covers a cell (C11b) adjacent to a cell (C11a) covered by the connected base station (10a);
a distance comparing unit (26) that compares the connected-base-station distance measured by the connected-base-station distance measuring unit (24) and the adjacent-base-station distance measured by the adjacent-base-station distance measuring unit (25) with each other when accepting information indicating that interference occurs from the adjacent base station (10b); and
a transmission-power adjusting unit (28) that lowers a power of a signal to be transmitted to the connected base station (10a) below the transmission power when a difference between the connected-base-station distance and the adjacent-base-station distance compared by the distance comparing unit (26) is equal to or smaller than a predetermined threshold.

2. The wireless terminal device (20a) according to claim 1, wherein
the connected-base-station distance measuring unit (24) measures the connected-base-station distance by measuring a path loss of a signal transmitted from the connected base station (10a),
the adjacent-base-station distance measuring unit (25) measures the adjacent-base-station distance by measuring a path loss of a signal transmitted from the adjacent base station (10b), and
the distance comparing unit (26) compares the path loss measured by the connected-base-station distance measuring unit (24) and the path loss measured by the adjacent-base-station distance measuring unit (25) with each other.

3. The wireless terminal device (20a) according to claim 1 or 2, further comprising an interference-source notification information transmitting unit (39) that transmits interference-source notification information to the connected base station (10a) when the power of the signal to be transmitted to the connected base station (10a) is lowered by the transmission-power adjusting unit (28), the interference-source notification information indicating that the power of the signal to be transmitted to the connected base station (10a) is lowered.

4. A wireless communication system (1; 2) comprising:
a wireless terminal device (20a);
a connected base station (10a) that communicates the wireless terminal device (20a); and
an adjacent base station (10b) that covers a cell (C11b) adjacent to a cell (C11a) covered by the connected base station (10a), wherein
the adjacent-base-station device (10b) includes:
an interference-degree measuring unit (13) that measures an interference degree of a signal transmitted from the wireless terminal device (20a);
an interference determining unit (14) that determines that interference with the adjacent base station (10b) occurs when a signal to interference ratio measured by the interference-degree measuring unit (13) is equal to or smaller than a predetermined threshold; and
a broadcast-information transmitting unit (16) that transmits broadcast information to the wireless terminal device (20a) when the interference determining unit (14) determines that interference with the adjacent base station (10b) occurs, the broadcast information indicating that interference with the adjacent base station (10b) occurs, and
the wireless terminal device (20a) determines based on predetermined information a transmission power that is a power of a signal to be transmitted to the connected base station (10a), and includes:
a connected-base-station distance measuring unit (24) that measures a connected-base-station distance that is a distance between the wireless terminal device (20a) and connected base station (10a);
an adjacent-base-station distance measuring unit (25) that measures an adjacent-base-station distance that is a distance between the wireless terminal device (20a) and the adjacent base station (10b); and
a distance comparing unit (26) that compares the connected-base-station distance measured by the connected-base-station distance measuring unit (24) and the adjacent-base-station distance measured by the adjacent-base-station distance measuring unit (25) with each other when the broadcast information transmitted by the broadcast-information transmitting unit (16) includes the information indicating that interference with the adjacent base station (10b) occurs; and
a transmission-power adjusting unit (28) that lowers a power of a signal to be transmitted to the connected base station (10a) below the transmission power when a difference between the connected-base-station distance and the adjacent-base-station distance compared by the distance comparing unit (26) is equal to or smaller than a predetermined threshold.

5. The wireless communication system (1; 2) according to claim 4, wherein
the connected-base-station distance measuring unit (24) measures the connected-base-station distance by measuring a path loss of a signal transmitted from the connected base station (10a),
the adjacent-base-station distance measuring unit (25) measures the adjacent-base-station distance by measuring a path loss of a signal transmitted from the adjacent base station (10b), and
the distance comparing unit (26) compares the path loss measured by the connected-base-station distance measuring unit (24) and the path loss measured by the adjacent-base-station distance measuring unit (25) with each other.

6. The wireless communication system (1; 2) according to claim 4 or 5, wherein
the interference-degree measuring unit (13) measures a Signal to Interference Ratio (SIR) of the signal transmitted from the wireless terminal device (20a) as an interference degree of the signal.

7. The wireless communication system (2) according to any one of claims 4 to 6, wherein
the wireless terminal device (20a) further includes an interference-source notification information transmitting unit (39) that transmits interference-source notification information to the connected base station (10a) when the power of the signal to be transmitted to the connected base station (10a) is lowered by the transmission-power adjusting unit (28), the interference-source notification information indicating that the power of the signal to be transmitted to the connected base station (10a) is lowered, and
the connected base station (10a) further includes a time-slot assigning unit (41) that assigns a time slot to another wireless terminal device positioned in the cell covered by the connected base station (10a) when the interference-source notification information transmitted by the interference-source notification information transmitting unit (39) is received, so that the signal transmitted from the wireless terminal device (20a) does not interfere with the adjacent base station (10b).

8. A wireless terminal device controlling method of controlling a wireless terminal device (20a) that determines a transmission power based on predetermined information, the transmission power being a power of a signal to be transmitted to a connected base station (10a), the method comprising:
measuring a connected-base-station distance that is a distance between the wireless terminal device (20a) and the connected base station (10a) that communicates with the wireless terminal device (20a);
measuring an adjacent-base-station distance that is a distance between the wireless terminal device (20a) and an adjacent base station (10b) that covers a cell (C11b) adjacent to a cell (C11a) covered by the connected base station (10a);
comparing the connected-base-station distance measured in the measuring of the connected-base-station distance and the adjacent-base-station distance measured in the measuring of the adjacent-base-station distance with each other when information indicating that interference occurs is accepted from the adjacent base station (10b); and
lowering a power of a signal to be transmitted to the connected base station (10a) below the transmission power when a difference between the connected-base-station distance and the adjacent-base-station distance compared in the comparing is equal to or smaller than a predetermined threshold.
